# FASCICULE DE BREVET EUROPEEN

(11) **EP 1 667 787 B1**
(45) Date de publication et mention de la délivrance du brevet: **12.10.2011**
(21) Numéro de dépôt: 04787460.7
(22) Date de dépôt: 27.09.2004
(51) Int. Cl.: B01D 65/08

(54) **PROCEDE POUR EVITER LE COLMATAGE DES MEMBRANES DE FILTRATION.**
VERFAHREN ZUR VERMEIDUNG DES VERSTOPFENS VON FILTRATIONSMEMBRANEN
METHOD FOR AVOIDING CLOGGING OF FILTRATION MEMBRANES

(30) Priorité: 30.09.2003 FR 0311452
(43) Date de publication de la demande: 14.06.2006
(73) Titulaire: Degremont S.A., 92500 Rueil-Malmaison Cédex (FR)
(72) Inventeur: LANGLAIS, Chrystelle, F-78230 le Pecq (FR)
(74) Mandataire: Michardière, Bernard
(86) Numéro de dépôt international: PCT/FR2004/002437
(87) Numéro de publication internationale: WO 2005/032698

(56) Documents cités:
- WO-A-03/095077
- DE-A- 4 325 937
- FR-A- 2 628 337
- FR-A- 2 835 444
- US-B1- 6 197 203
- PATENT ABSTRACTS OF JAPAN vol. 1996, no. 12, 26 décembre 1996 (1996-12-26) -& JP 08 215681 A (AYA HIDENORI; MAEZAWA IND INC), 27 août 1996 (1996-08-27) -& DATABASE WPI Section Ch, Week 199644 Derwent Publications Ltd., London, GB; Class D15, AN 1996-437657 XP002285898 & JP 08 215681 A (MAEZAWA KOGYO KK) 27 août 1996 (1996-08-27)
- PATENT ABSTRACTS OF JAPAN vol. 2002, no. 11, 6 novembre 2002 (2002-11-06) & JP 2002 191942 A (SUMITOMO HEAVY IND LTD), 10 juillet 2002 (2002-07-10)

## Description

La présente invention concerne un procédé permettant d'améliorer les performances des membranes de filtration qui sont mises en oeuvre dans le traitement d'effluents notamment des eaux riches en matières organiques telles que les eaux résiduaires secondaires. Le but du procédé de l'invention est d'éviter le colmatage de ces membranes.

Il est connu de l'homme de l'art que les membranes de micro-, ultra-, nano-filtration ou les membranes d'osmose inverse sont sensibles au colmatage induit par différents types de substances : matières en suspension, matières organiques, organismes biologiques (bactéries, algues,)...etc. L'identification de ces substances et les mécanismes de colmatage sont l'objet de nombreux travaux décrits dans la littérature.

Ces substances sont présentes en grande quantité par exemple dans les effluents issus des filières de traitement classique des eaux résiduaires, ce qui confère à ces effluents un caractère particulièrement colmatant qui en rend délicate la filtration sur membrane.

La mise en oeuvre industrielle des membranes et la gestion du caractère particulièrement colmatant des effluents traités, notamment des eaux résiduaires secondaires riches en substances colmatantes, se traduisent pour l'homme de l'art par la mise en place de procédures contraignantes et coûteuses que l'on rappellera ci-après :
1/ Mesures curatives : il s'agit des procédures de lavage chimique qui visent à restaurer les performances de la membrane lorsque celle-ci est colmatée. Ces stratégies de lavage chimique sont de plus en plus agressives en terme de choix de réactifs et de leur dosage, ainsi qu'en terme de fréquence de mise en oeuvre, hypothéquant la durée de vie des membranes et ayant un fort impact sur l'économie du traitement : coûts des réactifs et de leur gestion (évacuation), coût de l'immobilisation de la production qui en résulte mais également impacts environmentaux, et/ou :
2/ Mesures préventives : outre l'optimisation de la filière de traitement en amont des membranes, la mise en place d'un ultime prétraitement de finition (prétraitement additionnel) est très souvent mis en oeuvre pour une meilleure gestion de l'encrassement de la membrane. Ces mesures préventives se traduisent par les traitements suivants décrits dans la littérature et rappelés ci-après :
   Préchloration : il s'agit d'un dosage d'hypochlorite de sodium à des teneurs variant de 1 à 10 mg/l. Cette stratégie est fréquemment décrite dans la littérature en amont des membranes d'ultra- et de micro-filtration afin de contrôler le Bio-colmatage. A cet égard on peut citer les publications ci-après qui font état de réalisations industrielles de cette technique :
      P. Cote & al., 2001, Immersed membrana ultrafiltration for tertiary treatment of sewage effluent, Proc. IWA Congress Wastewater Reclamation and reuse, September 2001, Tel Aviv, Israel;
   Van Houtte E. & Verbauwhede J., 2003, Re-use of wastewater effluent for indirect production of drinking water in Flander, Belgium, Proc. AWWA Congress of Atlanta 2003;
   Gullet et al., 2003, Advanced wastewater treatment and water reclamation using membrane filtration in charlotte, North America, Proc. AWWA Congress of Atlanta 2003.

Cette option présente notamment les inconvénients suivants :
- la production de sous-produits d'oxydation qui, en fonction du type de membrane utilisée, peuvent ne pas être retenus par cette dernière. Dans ce cas, les sous-produits d'oxydation se retrouvent dans l'eau traitée et leur élimination nécessite des post-traitements lourds et coûteux (Osmose inverse, adsorption, ...),
- la nécessité d'une étape de déchloration des effluents filtrés lorsque la teneur résiduelle en oxydant est incompatible avec le milieu récepteur ou le type de réutilisation de l'eau traitée ou avec un second étage de membrane non résistante aux oxydants (cas des couplages UF ou MF et Osmose inverse mettant en oeuvre des membranes composites en polyamide par exemple).

Dosage de chloramines : lorsque la composition de la membrane est incompatible avec le chlore (membrane non résistante aux oxydants), une alternative à la préchloration est le dosage de chloramines. Cette alternative est décrite dans la littérature en amont de membranes de micro-filtration en polypropylène ou plus couramment en amont de membranes d'osmose inverse.
Microcoagulation : une seconde alternative à la technique de préchloration consiste à injecter dans l'effluent à traiter, avant son passage sur la membrane, des micro doses d'un réactif de coagulation déstabilisant les matières colloïdales en suspension, en vue de contrôler le colmatage des membranes. Cette technique est décrite dans EP-A-1 239 943.

Des applications industrielles pour le traitement d'eaux résiduaires secondaires sont décrites dans :
Van Gottberg at al., 2003, World's largest membrane-based Water reuse Project, Proc. AWWA Congress of Atlanta 2003,
Wilf M. & Alt S., 2000, Application of low fouling RO membrane element for reclamation of municipal wastewaer, Proc. IWA Congress Membrane drinking and Industrial Water Production, October 2000, Paris, France;
   et l'application au traitement de l'eau de mer est décrite dans :
   Brehant A. et al., 2002, Assessment of ultrafiltration as a pretreatment of reverse osmosis membranes for surface sea water desalination, Proc. Conference on Membranes in Drinking Water and Industrial Water Production, Mülheim an der Ruhr, September 22-26, 2002, pp. 775-784;
   D. Vial et al., 2002, Seawater RO pre-treatment with 0,1 □m Microza®, proc. 5th Annual IDS Conference on Pretreatment and Post-treatment Technologies in desalination, Haifa, Israel, December 3-4, 2002, pp 65-71;
   D. Vial et Doussau G., 2002, The use of ultrafiltration membrane as seawater pre-treatment prior reverse osmosis membranes, Desalination, 153, 141-47.

Les inconvénients de cette solution technique sont notamment les suivants :
- la production de boues chimiques et leur gestion (traitement ou évacuation),
- un colmatage à base d'hydroxydes metalliques nécessitant la mise en oeuvre de procédures de lavage et de réactifs spécifiques.

Plus généralement, toutes les solutions techniques décrites ci-dessus induisent des coûts liés à :
- l'achat des réactifs chimiques,
- la gestion et le stockage de réactifs chimiques sur site,
- la mise en contact de la membrane avec un réactif chimique qui, selon les conditions de mise en oeuvre, a un impact sur la durée de vie de la membrane
- la génération de rejets polluants nécessitant des traitements remettant en cause l'aspect environnemental de la filière de traitement.

JP 08 215681 vise à réduire ou empêcher le colmatage des membranes de filtration et, pour cela, propose une addition de boues sur lesquelles se fixent les particules de façon à atteindre une taille supérieure à celle des pores de la membrane et ainsi limiter le mécanisme d'obstruction. Les boues envisagées par ce document n'ont pas un caractère organique naturel et encore moins un caractère de floc biologique.

DE 43 25 937 A concerne un procédé pour influencer et réduire le colmatage de membranes de filtration. Ce document propose de réduire l'épaisseur de la couche du gâteau de filtration formé sur la membrane par l'addition de poudre non gonflante qui, par effet abrasif, réduit de manière mécanique l'épaisseur du gâteau de filtration. Cette approche est radicalement opposée à celle de l'invention qui préconise l'addition d'un adsorbant organique naturel, sous forme d'un floc biologique, qui favorise la formation d'un gâteau de filtration.

WO 03/095077 est un document intercalaire (article 54(3) CBE) et propose dans un dispositif de filtration comprenant un bassin de filtration comportant des membranes, précédé d'un contacteur, de prévoir un passage entre un bassin du contacteur et le bassin de filtration. Ce document divulgue les problémes d'une couche biologique sur la surface des membranes (Bio-Fouling") En conséquence, l'invention concerne un procédé permettant d'éviter ou de réduire le colmatage des membranes de filtration mises en oeuvre notamment dans le traitement d'effluents tels que des eaux résiduaires, caractérisé en ce qu'il consiste à ajouter à l'effluent à filtrer un floc biologique destiné à piéger les molécules et particules colmatantes vis-à-vis des membranes de filtration, le floc biologique présentant une concentration moyenne en matières sèches inférieure ou égale à 2 g/l au voisinage de la membrane.

Ce floc biologique peut être constitué par les boues biologiques provenant de l'amont de l'installation de filtration membranaire, dans la mesure où il s'agit d'une station d'épuration biologique. Selon un autre mode de mise en oeuvre, le floc biologique peut être constitué par des boues biologiques provenant d'une station de traitement distincte, ces boues pouvant être injectées par exemple dans des stations de potabilisation physico-chimique (production d'eau potable à partir d'eau douce, d'eau saumâtre ou d'eau de mer.

Selon l'invention, le floc biologique peut être introduit soit directement dans la cuve de filtration lorsqu'il s'agit de systèmes de filtration à membranes dits immergés ou dans l'effluent à filtrer avant son admission dans la membrane, lorsqu'il s'agit de systèmes de filtration dits en carter. L'alimentation du floc biologique peut être continue ou discontinue.

On a constaté, de manière surprenante, que le floc biologique assure le piégeage des particules et molécules colmatantes vis-à-vis de la membrane et forme une couche protectrice à la surface de cette membrane, bien que le caractère très colmatant d'un tel floc soit identifié dans la littérature. Le procédé ainsi caractérisé permet d'améliorer les performances de la membrane et de s'affranchir en amont de la membrane de tout prétraitement chimique de finition décrit ci-dessus.

Ainsi selon le procédé de l'invention, les matières responsables du caractère colmatant de l'effluent sont transférées sur le floc biologique par des phénomènes d'adsorption, d'absorption et de piégeage par floculation empêchant leur mise en contact direct avec la membrane. Le floc biologique forme par ailleurs, ainsi qu'on l'a mentionné ci-dessus, une couche protectrice à la surface de la membrane.

L'invention permet d'assurer un contrôle optimisé du colmatage de la membrane autorisant une diminution de l'emploi des réactifs chimiques pour les phases de régénération (lavages chimiques).

Ainsi qu'on le sait, le floc biologique est naturellement produit dans les stations de traitement d'eau résiduaire mettant en oeuvre une étape de traitement biologique. Sa présence et sa gestion font par conséquent partie intégrante des installations traditionnelles de traitement d'eau résiduaire. La réutilisation du floc biologique en traitement tertiaire n'induit donc aucune modification des flux de matières sur la station.

Par ailleurs, dans le cas de membranes aérées, l'apport d'oxygène vers le floc biologique au voisinage de la membrane présente des avantages complémentaires suivants :
- il contribue à la stabilisation du floc biologique et,
- si ce floc biologique est recyclé vers un réacteur biologique, il contribue à réduire les phénomènes intempestifs de foisonnement sur la filière de traitement en amont.

D'autres caractéristiques et avantages de la présente invention ressortiront de la description faite ci-après en référence au dessin annexé qui en illustre deux exemples de mise en oeuvre n'ayant aucun caractère limitatif. Sur ce dessin :
- la figure 1 est une vue schématique représentant un exemple de mise en oeuvre du procédé de l'invention appliqué à des systèmes de filtration dits immergés et,
- la figure 2 est également une vue schématique illustrant un exemple de mise en oeuvre pour des systèmes de filtration dits en carter.

Dans ces deux exemples de mise en oeuvre l'adsorbant organique naturel ajouté à l'effluent et destiné à assurer le piégeage des molécules et particules colmatantes vis-à-vis de la membrane est constitué par des boues biologiques.

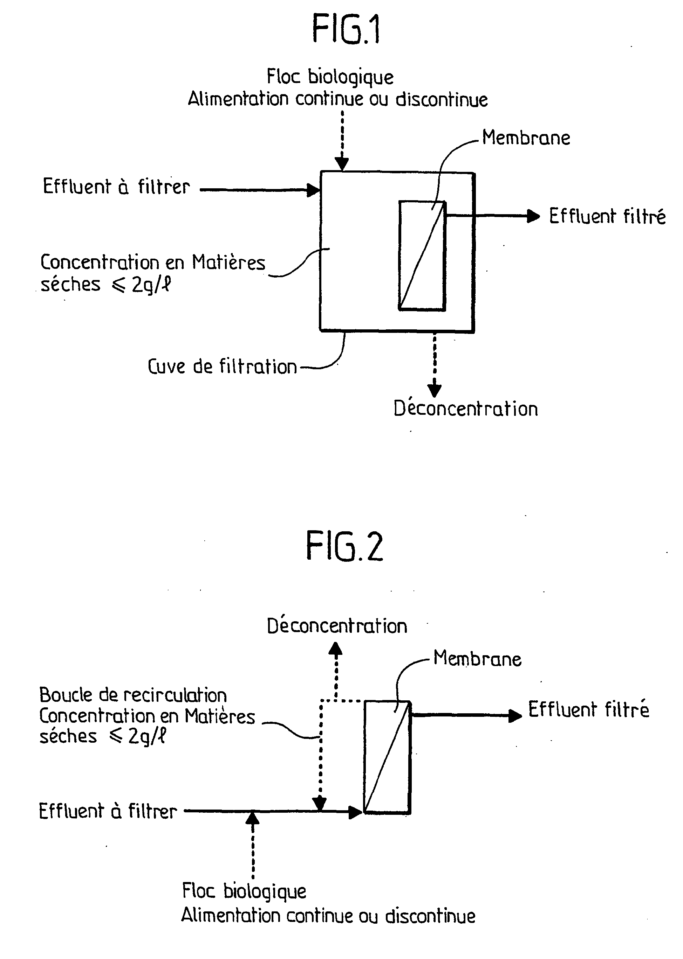

En se référant à la figure 1, on voit que, dans cet exemple de mise en oeuvre, le floc biologique, alimenté de façon continue ou discontinue est introduit dans la cuve de filtration dans laquelle est immergée la membrane. Dans l'exemple illustré par la figure 2, le floc biologique, pouvant être également alimenté de façon continue ou discontinue est introduit directement dans l'effluent à filtrer avant l'introduction dans la membrane.

On a donné ci-après, afin d'illustrer les avantages et effets techniques apportés par l'invention, un exemple de mise en oeuvre du procédé défini ci-dessus et, aux fins de comparaison des exemples de mise en oeuvre de la technique selon l'état antérieur.

Il s'agit d'essais de traitement par ultrafiltration d'un effluent résiduaire urbain issu d'une station d'épuration de type boue activée, clarification gravitaire. La composition de l'effluent secondaire est la suivante :
DCO total (demande chimique en oxygène total): 40 mg O₂/l DBO₅ (demande biochimique en oxygène en 5 jours):7 MhgO₂/l MeS (matières en suspension) : 10 ± 5 mg/l
COT (carbone organique total) : 6 mg C/l

Les résultats des essais de filtration sur une membrane commerciale d'ultrafiltration sont les suivants :
Pour un flux de filtration normalisé de 1 et en absence de prétraitement, la membrane commerciale de type connu se colmate très rapidement, la perméabilité normalisée diminue de plus de 55% en moins de 10 h confirmant la nécessité d'un prétraitement de finition tel que mentionné ci-dessus.
La mise en oeuvre d'un prétraitement de finition de type pré-chloration permet, dans des conditions de flux identique, de contrôler l'encrassement de la membrane. Dans ce cas, la perméabilité normalisée diminue de 40% en 30 jours de fonctionnement. Cet encrassement est - acceptable et illustre les résultats pouvant être obtenus avec les techniques actuelles.

En mettant en oeuvre le procédé objet de l'invention tel que caractérisé ci-dessus, c'est-à-dire en mettant la membrane au contact d'un floc biologique présentant une' concentration moyenne en matière sèche de 1,8 g/l au voisinage de la membrane, on a constaté que le colmatage de la membrane est très nettement réduit. La perméabilité normalisée de la membrane ne diminue alors que de 25% en 30 j de fonctionnement alors que le flux de filtration était augmenté de 10 %.

Dans ce cas, la mise en oeuvre du procédé objet de l'invention permet de réduire le colmatage de la membrane tout en améliorant les performances hydrauliques de celle-ci de près de 10% et ce sans aucune addition de réactif chimique en amont de la membrane. Ces résultats permettent de retarder la mise en oeuvre des procédures de régénération chimiques.

La présente invention présente donc de nombreux avantages tels que notamment :
- suppression de l'emploi préventif de réactif chimique en amont des membranes et donc des coûts induits par leur achat et leur mise en oeuvre ;
- diminution de l'emploi curatif de réactif pour les phases de régénération et donc des coûts induits par leur achat et leur mise en oeuvre ;
- augmentation de la durée de vie de la membrane en réduisant son exposition à des substances chimiques agressives;
- absence de production de sous produits d'oxydation ;
- suppression d'un éventuel post-traitement de déchloration de l'effluent filtré ;
- absence de production de boues physico-chimiques;
- en conséquence des points précédents, amélioration de l'impact environnemental de la filière de traitement.
   mais également dans le cas d'une filière de traitement intégrant en amont une étape de traitement biologique :
- absence de production spécifique de boue biologique liée à ce prétraitement de finition,
- et, enfin, réutilisation de flocs biologiques naturellement produits sur les installations de traitement.

Il demeure bien entendu que la présente invention n'est pas limitée aux exemples de réalisation et de mises en oeuvre mentionnés mais qu'elle en englobe toutes les variantes.

## Revendications

1. Procédé permettant d'éviter ou de réduire le colmatage des membranes de filtration mises en oeuvre notamment dans le traitement d'effluents tels que des eaux résiduaires **caractérisé en ce qu'**il consiste à ajouter à l'effluent à filtrer, un floc biologique destiné à piéger les molécules et particules colmatantes vis-à-vis des membranes de filtration, le floc biologique présentant une concentration moyenne en matières sèches inférieure ou égale à 2 g/l au voisinage de la membrane.

2. Procédé selon la revendication 1, **caractérisé en ce que** ledit floc biologique est constitué par les boues biologiques provenant de l'amont de l'installation de filtration membranaire.

3. Procédé selon la revendication 1, **caractérisé en ce que** ledit floc biologique est constitué par des boues biologiques provenant de l'amont d'une station de traitement distincte, ces boues pouvant être injectées notamment dans des stations de potabilisation physico-chimique, pour la production d'eau potable à partir d'eau douce, d'eau saumâtre ou d'eau de mer.

4. Procédé selon l'une quelconque des revendications 1 à 3 **caractérisé en ce que** le floc biologique est introduit directement dans la cuve de filtration.

5. Procédé selon l'une quelconque des revendications 1 à 3 **caractérisé en ce que** le floc biologique est introduit dans l'effluent à filtrer, avant la membrane de filtration.

6. Procédé selon l'une quelconque des revendications précédentes **caractérisé en ce que** l'alimentation du floc biologique s'effectue de façon continue.

7. Procédé selon l'une quelconque des revendications 1 à 5 **caractérisé en ce que** l'alimentation du floc biologique s'effectue de façon discontinue.

## Claims

1. A method for preventing or reducing the clogging of filtration membranes used in particular in the treatment of effluents such as wastewater, **characterized in that** it comprises the addition of a biological floc to the effluent for filtration, intended for trapping the molecules and particles which clog the filtration membranes, the biological floc having an average dry matter concentration lower than or equal to 2 g/l in the neighborhood of the membrane.

2. The method as claimed in claim 1, **characterized in that** said biological floc consists of biological sludge issuing upstream of the membrane filtration installation.

3. The method as claimed in claim 1, **characterized in that** said biological floc consists of biological sludge issuing upstream of a distinct treatment station, this sludge being injectable in particular into physicochemical potabilization stations for producing drinking water from freshwater, brackish water or seawater.

4. The method as claimed in any one of claims 1 to 3, **characterized in that** the biological floc is introduced directly into the filtration tank.

5. The method as claimed in any one of claims 1 to 3, **characterized in that** the biological floc is introduced into the effluent for filtration, before the filtration membrane.

6. The method as claimed in any one of the preceding claims, **characterized in that** the biological floc is fed continuously.

7. The method as claimed in any one of claims 1 to 5, **characterized in that** the biological floc is fed in batches.

## Patentansprüche

1. Verfahren, das ermöglicht, das Verstopfen der Filtermembranen, die insbesondere bei der Aufbereitung von Abflüssen, wie Abwässern eingesetzt werden, zu verhindern oder zu reduzieren, **dadurch gekennzeichnet, dass** es darin besteht, dem zu filternden Abfluss ein biologisches Flockungsmittel zuzugeben, das dazu bestimmt ist, die verstopfenden Moleküle und Teilchen gegenüber den Filtermembranen einzufangen, wobei das biologische Flockungsmittel eine durchschnittliche Trockensubstanzkonzentration von weniger als oder gleich 2 g/l in der Nähe der Membran aufweist.

2. Verfahren nach Anspruch 1, **dadurch gekennzeichnet, dass** das biologische Flockungsmittel von den vom stromaufwärtigen Bereich der Membranfiltrationsanlage stammenden biologischen Schlämmen gebildet ist.

3. Verfahren nach Anspruch 1, **dadurch gekennzeichnet, dass** das biologische Flockungsmittel von von dem stromaufwärtigen Bereich einer separaten Aufbereitungsanlage stammenden biologischen Schlämmen gebildet ist, wobei diese Schlämme insbesondere in Anlagen zur physikalisch-chemischen Trinkwassergewinnung für die Herstellung von Trinkwasser aus Süßwasser, Brackwasser oder Meerwasser eingeleitet werden können.

4. Verfahren nach einem der Ansprüche 1 bis 3, **dadurch gekennzeichnet, dass** das biologische Flockungsmittel direkt in den Filtrationsbehälter eingeleitet wird.

5. Verfahren nach einem der Ansprüche 1 bis 3, **dadurch gekennzeichnet, dass** das biologische Flockungsmittel in den zu filternden Abfluss vor der Filtermembran eingeleitet wird.

6. Verfahren nach einem der vorstehenden Ansprüche, **dadurch gekennzeichnet, dass** das Zuführen des biologischen Flockungsmittels kontinuierlich erfolgt.

7. Verfahren nach einem der Ansprüche 1 bis 5, **dadurch gekennzeichnet, dass** das Zuführen des biologischen Flockungsmittels diskontinuierlich erfolgt.
